**Europäisches Patentamt**

**European Patent Office**

**Office européen des brevets**

(19)

(11) Veröffentlichungsnummer: **0 045 865 B1**

(12)

# EUROPÄISCHE PATENTSCHRIFT

(45) Veröffentlichungstag der Patentschrift:
**12.10.83**

(51) Int. Cl.³: **B 01 D 53/36,** B 01 D 53/04, C 01 B 17/04

(21) Anmeldenummer: **81105649.8**

(22) Anmeldetag: **18.07.81**

(54) Verfahren zur Entfernung von Schwefelwasserstoff aus kohlenwasserstoffhaltigen Gasgemischen.

(30) Priorität: **01.08.80 DE 3029188**

(43) Veröffentlichungstag der Anmeldung:
**17.02.82 Patentblatt 82/7**

(45) Bekanntmachung des Hinweises auf die Patenterteilung:
**12.10.83 Patentblatt 83/41**

(84) Benannte Vertragsstaaten:
**FR GB IT NL**

(56) Entgegenhaltungen:
**DE-A-1 952 346**
**DE-A-2 652 099**
**US-A-2 771 964**

(73) Patentinhaber: **Bergwerksverband GmbH,
Franz-Fischer-Weg 61, D-4300 Essen 13 (DE)**

(72) Erfinder: **Henning, Klaus-Dirk, Am Kirchhof 29,
D-4300 Essen (DE)**
Erfinder: **Klein, Jürgen, Dr., Hülscherfeld 32,
D-4300 Essen 14 (DE)**
Erfinder: **Jüntgen, Harald, Prof. Dr.,
Bonscheiterstrasse 79, D-4300 Essen 15 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Entfernung von Schwefelwasserstoff aus kohlenwasserstoffhaltigen Gasgemischen

Die Erfindung betrifft ein Verfahren gemäss dem Oberbegriff des Patentanspruches.

Die katalytische Oxidation des Schwefelwasserstoffes an Aktivkohle zu Elementarschwefel wird bereits seit vielen Jahren bei Verfahren zur $H_2S$-Entfernung aus Gasgemischen technisch genutzt. Hierbei wird der entstehende Schwefel an der inneren Oberfläche der Aktivkohle absorbiert, wobei Schwefel-Beladungen bis zu 100 Gew.-% erzielt werden.

Besondere Massnahmen dienen bei diesem Verfahren zur Erhöhung der Aktivität der Aktivkohle und zur Verbesserung der Reinigungsleistung. So ist beispielsweise die fördernde Wirkung von Wasserdampf (DE-C-447 757) und von Ammoniumsalzen (DE-C-398 171) auf die Reaktionsgeschwindigkeit bekannt. Ausserdem ist es bekannt, für die Entschwefelung der Abgase von Claus-Anlagen bestimmte Aktivkohlen mit einer steilen Adsorptionsisotherme zu verwenden und die Regeneration der beladenen Aktivkohlen im Temperaturbereich von 300–500°C mit inerten Gasen durchzuführen (DE-A-15 44 084).

Weiterhin ist einerseits die Verwendung schwermetallarmer hydrophober Aktivkohlen (DE-B-12 76 604), andererseits die Verwendung mit Katalysatoren imprägnierter (beispielsweise Jod) Aktivkohlen bekannt, wobei eine weitporige Aktivkohle zur $H_2S$-Oxidation und eine engporige Aktivkohle zur Adsorption des $CS_2$ verwendet wird (DE-B-12 24 865).

Diesen bekannten Verfahren ist gemeinsam, dass die $H_2S$-Entfernung sich auf Gasgemische beschränkt, die frei von höheren Kohlenwasserstoffen und von zur Polymerisation neigenden Verbindungen sind. Man ging nämlich davon aus, dass durch Polymerisation oder durch Oxidation der ungesättigten Verbindungen harzähnliche Produkte gebildet werden, die die Poren der Aktivkohlen verstopfen und die katalytische $H_2S$-Oxidation behindern. Diese Schädigungen der Aktivkohle sind durch die bekannten Regenerationsverfahren Heissgas-Desorption und Lösungsmittel-Extraktion nicht rückgängig zu machen. Daher wird in der Regel ein von höheren Kohlenwasserstoffen freies Rohgas für die Entschwefelung gefordert (Erdöl-Erdgas 83 (1967), Seite 170).

Der Erfindung liegt die Aufgabe zugrunde, eine Entschwefelung mittels eines Aktivkohle-Verfahrens auch bei solchen Gasgemischen durchzuführen, welche die katalytische $H_2S$-Oxidation behindernde Gaskomponenten, also insbesondere höhere Kohlenwasserstoffe und/oder zur Polymerisation neigende Verbindungen enthalten.

Diese Aufgabe wird erfindungsgemäss durch die kennzeichnenden Merkmale des Patentanspruches gelöst. Bevorzugt wird ein durch Benzoladsorption gemessenes Adsorptionsporenvolumen von 0,5–0.7 cm³/g, ein durch Quecksilberporosimetrie bestimmten Zuleitungsporenvolumen von 0,5–0,8 cm³/g, bei einem Gesamtporenvolumen von 0,6–1,7 cm³/g, vorzugsweise von 1,1–1,5 cm³/g, eine BET-Oberfläche von 1.000–1.400 m²/g sowie einer Rütteldichte von 300–500 g/l, vorzugsweise 325–400 g/l.

Die Entfernung von organischen Verbindungen aus Abluftströmen durch Adsorption an Aktivkohle wird zwar schon bei vielen Verfahren der Lösemittelrückgewinnung und der Abluftreinigung realisiert, jedoch wird bei diesen Verfahren die vollständige Entfernung aller organischen Verbindungen angestrebt. Dies hat zur Folge, dass die Aktivkohle sehr schnell erschöpft ist und verworfen oder regeneriert werden muss. Überraschenderweise werden dagegen beim erfindungsgemässen Verfahren mit der weitporigen Aktivkohle im Temperaturbereich von 100–250°C nur die Kohlenwasserstoffe selektiv adsorbiert, die eine anschliessende $H_2S$-Oxidation behindern, nämlich überwiegend nur ungesättigte und zur Polymerisation neigende und extrem hoch siedende Verbindungen. Mehr als 95% der im Gasgemisch vorhandenen organischen Verbindungen werden dagegen im 1. Reaktor nicht abgeschieden, behindern aber auch nicht die Entschwefelung im 2. Reaktor.

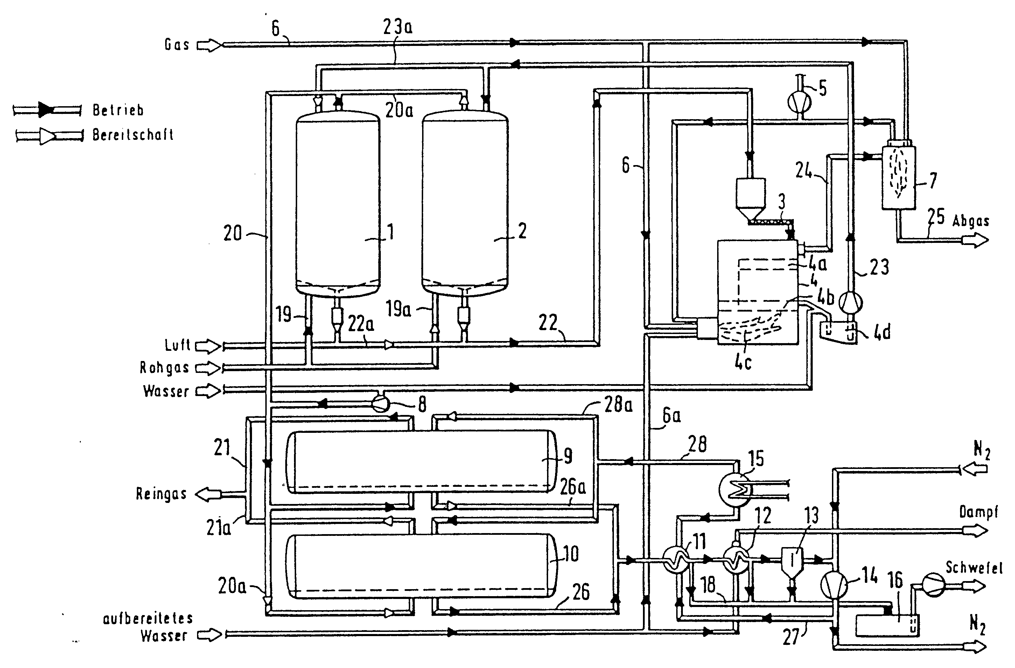

Anhand der Zeichnung, die den Verfahrensablauf schematisch aufzeigt, sei die Erfindung näher beschrieben. Hierbei gelten für die Beladung der Reaktoren 1 und 9 sowie für die Regeneration der Reaktoren 2 und 10 – also im jeweils ersten Zyklus-die dick gezeichneten Leitungen und im Wechsel nach dem Umschalten auf die parallel geschalteten Reaktoren – also im jeweils zweiten Zyklus – die dünn gezeichneten Leitungen.

Das Rohgas wird durch Leitung 19 zunächst dem Aktivkohle-Reaktor 1 (Vorfilter) zur selektiven Abscheidung der die katalytische $H_2S$-Oxidation behindernden organischen Verbindungen aufgegeben. Das den Reaktor 1 durch Leitung 20 verlassende Gas wird durch Leitung 8 mit der erforderlichen Sauerstoffmenge versetzt und durchströmt dann den mit weitporiger Aktivkohle gefüllten Entschwefelungs-Reaktor 9, den es durch Leitung 21 als Reingas verlässt (vergl. DE-A-26 52 099.0).

In der Zwischenzeit wird die beladene Aktivkohle des Aktivkohle-Reaktors 2 (Vorfilter) durch die Leitung 22 einer Regenerationsanlage zugeführt. Im zweistufigen Wirbelschichtofen 4 erfolgt nach Eindosierung durch 3 zunächst in der obersten Stufe 4a die Aufheizung der Aktivkohle und die Desorption der reversiblen Aktivkohlebeladung. In der unteren Stufe 4b wird die Aktivkohle-Restbeladung in bekannter Weise durch den Wasserdampfanteil des Wirbelgases bei 750–850°C vergast. Das benötigte Wirbelgas wird durch stöchiometrische Verbrennung von Gas aus Leitung 6 (z.b. Erdgas) mit Luft aus Leitung 5 erzeugt, wobei zur Temperaturregelung aufbereitetes Wasser aus Leitung 6a durch das im Wirbelschichtofen 4 (Wirbelschichtreaktor) integrierte Brennersystem 4c mit eingebracht wird. Die regenerierte heisse Aktivkohle wird mit Wasser im Kühler 4d abgekühlt und über Leitung 23 dem Adsorber 2 zugeführt. Das Abgas aus dem Wirbelschichtofen 4 wird mittels Leitung 24 einer thermischen Nachverbrennung 7 zugeführt, in der die Inhaltsstoffe zu unschädlichen Verbindungen verbrannt werden und durch Leitung 25 als gereinigtes Abgas abgeführt werden.

Gleichzeitig wird in den Entschwefelungs-Reaktor 10 durch Leitung 28 heisses Inertgas (T = 450°C), z.B. $N_2$ und vorzugsweise im Kreislauf geführt (Kreislauf-Gasstrom) eingeführt und der Schwefel durch Desorption in bekannter Weise z.B. unter Normaldruck ausgetrieben. Der schwefelbeladene Gasstrom verlässt den Absorber 10 durch Leitung 26 und wird in den Wärmetauschern 11 + 12 zweistufig auf ca. 120°C abgekühlt, wobei flüssiger Schwefel anfällt, der durch Leitung 18 der Schwefel-Vorlage 16 zugeführt wird. Der Kreislauf-Gasstrom durchströmt sodann den Abscheider 13 (Schwefelabscheider) und wird vom Gebläse 14 über Leitung 27 erneut der Desorption zugeführt, wobei die Erhitzung auf 450°C im Wärmetauscher 11 und im Überhitzer 15 erfolgt.

Sobald die Aktivkohlen in den Reaktoren 1 und 9 vollständig oder in sonstwie vorbestimmtem Masse beladen sind, werden im Wechsel die parallel geschalteten regenerierten bzw. desorbierten Reaktoren 2 und 10 betrieben, die in entsprechender Weise mit den Leitungen 19a, 20a, 21a, 22a, 23a, 26a, 28a verbunden sind; dabei ist es nicht unbedingt erforderlich, dass die Umschaltung gleichzeitig erfolgt, sie kann vielmehr für beide Reaktoren zeitlich unabhängig voneinander und dem jeweiligen Beladungszustand entsprechend vorgenommen werden.

Beispiel
Ein Gasgemisch mit der in Tabelle 1 aufgezeigten Zusammensetzung, das neben 6 g $H_2S/m^3$ noch 34 unterschiedliche Kohlenwasserstoffe enthält, wird in der in der Zeichnung dargestellten Anlage gemäss dem Verfahren der Erfindung entschwefelt. Die Betriebsdaten und Betriebsbedingungen sind der Tabelle 2 zu entnehmen. Die verwendeten Aktivkohlen hatten folgende Kennzeichen:

| Aktivkohletyp | ANT | ANJ |
|---|---|---|
| Korndurchmesser (mm) | 3 | 3 |
| Rütteldichte (g/l) | 350 | 360 |
| Kaliumjodidgehalt (%) | – | 1,5 |
| Adsorptionsporenvolumen ($cm^3/g$) | 0,6 | 0,65 |
| Zuleitungsporenvolumen ($cm^3/g$) | 0,75 | 0,8 |
| BET-Oberfläche ($m^2/g$) | 1.200 | 1.250 |

Tabelle 1:

| Gasgemisch-Zusammensetzung | ($ml/m^3$) i.N., Feuchtgas | ($mg/m^3$) Trockengas | Gesamtbelastung der Aktivkohle (AK)* in 10 Adsorptions/ Desorptionszyklen (g/kg AK) |
|---|---|---|---|
| Schwefelwasserstoff | 3 281 | 6 000 | 8 244 |
| Sauerstoff | 2 246 | 3 900 | 5 332 |
| Ammoniak | 3 281 | 3 000 | 4 120 |
| $H_2O$ | 154 948 | 150 000 | 203 324 |
| Benzol | 1 279 | 5 380 | 8 856 |
| Toluol | 303 | 1 480 | 2 440 |
| O-Xylol | 31,3 | 178 | 293 |
| m-Xylol | 31,3 | 178 | 293 |
| p-Xylol | 31,3 | 178 | 293 |
| Phenol | 3,9 | 20 | 32 |
| Mesitylen | 3,1 | 20 | 32 |
| Pseudocumol | 4,7 | 30 | 51 |
| Inden | 8,1 | 50 | 85 |
| Naphthalin | 5,8 | 40 | 67 |
| Diphenyl | 0,1 | 1 | 2 |
| Dimethylnaphthalin 1,3 | 0,4 | 3 | 5 |
| Dimethylnaphthalin 1,4 | 0,4 | 3 | 5 |
| Dimethylnaphthalin 1,5 | 0,1 | 1 | 2 |
| Acenaphthen | 0,2 | 2 | 4 |
| Dibenzofuran | 0,2 | 2 | 4 |

Tabelle 1 (Fortsetzung)

| Gasgemisch-Zusammensetzung | (ml/m³) i.N., Feuchtgas | (mg/m³) Trockengas | Gesamtbelastung der Aktivkohle (AK)* in 10 Adsorptions/ Desorptionszyklen (g/kg AK) |
|---|---|---|---|
| Fluoren | 1,1 | 10 | 17 |
| Iso-Octan | 1,1 | 10 | 17 |
| Nonan | 1,1 | 10 | 17 |
| Methylnaphthalin – 1 | 0,4 | 3 | 5 |
| Methylnaphthalin – 2 | 0,4 | 3 | 5 |
| Butadien 1,3 | 18,6 | 55 | 76 |
| Methan | 2 064 | 1 780 | 2 440 |
| Äthan | 1 494 | 2 410 | 3 313 |
| Äthylen | 918 | 1 380 | 1 875 |
| Propan | 199 | 470 | 646 |
| Propen | 293 | 660 | 905 |
| i-Butan | 21,5 | 67 | 92 |
| n-Butan | 21,5 | 68 | 92 |
| i-Buten | 33,2 | 100 | 137 |
| n-Buten | 33,2 | 100 | 137 |
| n-Hexan | 4,3 | 20 | 30 |
| n-Pentan | 15,6 | 60 | 83 |
| n-Heptan | 3,7 | 20 | 30 |
| NO | 9,3 | 15 | 21 |
| Stickstoff | 773 418 | – | – |

i.N. = 20°C, 760 mm Hg     * = im Vorfilter

Tabelle 2:

| Apparatur<br>Techn. Daten | Vorfilter | Entschwefelungsreaktor | | Wirbel-schicht-Reaktor |
|---|---|---|---|---|
| | | Adsorption | Desorption | |
| Durchmesser (mm) | 42 | 42 | | 126 |
| Schichthöhe d. AK (mm) | 500 | 500 | | 28 |
| Aktivkohle (AK) | ANT | ANJ | | ANT |
| Aktivkohlemenge (cm³) | 700 | 700 | | 350 |
| Temperatur (°C) | 150 | 150 | 450 | 800 |
| Gasdurchsatz (m³ₙ/h) | 1,024 | 1,024 | 0,4 | 10,2 |
| Strömungsgeschwindigkeit (m/s) | 0,32 (150°C) | 0,32 (150°C) | 0,21 (450°C) | 0,9 (800°C) |
| Reaktionsdauer (h) | – | – | 5 | 1 |
| Zusammensetzung des Gases | Gasgemisch Tabelle 1 | Gasgemisch Tabelle 1 | Stickstoff | 70% N₂ 30% H₂O |

Nach dem Reaktor 1 wurde das Gasgemisch mit der zur H₂S-Oxidation erforderlichen Sauerstoffmenge (also etwa stöchiometrisch bis leicht überstöchiometrisch versetzt und im Entschwefelungs-Reaktor weiter behandelt. Bei Unterschreitung eines Entschwefelungsgrades von etwa 90% wurde die Entschwefelungsphase abgebrochen, die schwefelbeladene Aktivkohle bei 450°C durch eine Heissgas-Kreislaufdesorption regeneriert und erneut zur Entschwefelung verwendet. – Die Aktivkohle des Vorfilters wurde jeweils nach einer Belastung von etwa 640 m³ Gasgemisch pro kg Aktivkohle in dem Wirbelschichtreaktor reaktiviert.

Die Tabelle 3 zeigt die nach 10 Zyklen erreichte Beladung an Kohlenwasserstoffen der Aktivkohle in den beiden Reaktoren jeweils vor der Reaktivierung bzw. Desorption. Sie verdeutlicht, dass bevorzugt die hochsiedenden und die zur Polymerisation neigenden Verbindungen an der Aktivkohle des Reaktors 1 adsorbiert werden, beispielsweise Inden, Butadien, Phenol, Dibenzofuran, Fluoren und Naphtalin.

Tabelle 3:

| Verbindungen | mg/g Aktivkohle (im Mittel) | Vorfilterkohle ANT | Entschwefelungs-Reaktor ANJ |
|---|---|---|---|
| Toluol | | 5,87 | 1,07 |
| n-, p-Xylol | | 12,41 | 2,09 |
| o-Xylol | | 0,22 | 0,023 |
| n-Nonan | | 1,52 | 0,12 |
| Mesitylen | | 2,40 | 0,33 |
| Pseudocumol | | 3,53 | 0,81 |
| Inden | | 0,27 | – |
| n-Butylbenzol | | 0,17 | – |
| Naphthalin | | 24,72 | 0,30 |
| 1-Methylnaphthalin | | 0,42 | – |
| 2-Methylnaphthalin | | 0,38 | – |
| Diphenyl | | 0,13 | – |
| 1,3-Dimethylnaphthalin | | 0,44 | – |
| 1,4-Dimethylnaphthalin | | 0,48 | – |
| Dibenzofuran | | 0,19 | – |
| Fluoren | | 0,35 | – |

Auf der Aktivkohle des Entschwefelungs-Reaktors sind dagegen nur geringe Mengen an Kohlenwasserstoffen adsorbiert.

Insgesamt werden unter den Bedingungen des Beispiels etwa 264 g Kohlenwasserstoffe / kg Aktivkohle selektiv aus dem Gasgemisch entfernt, obwohl die Aktivkohle im 1. Reaktor insgesamt mit etwa 22,4 kg Kohlenwasserstoffe / kg Aktivkohle beaufschlagt wird. Mit einer selektiven Entfernung einer geringen Menge der im Gasgemisch vorhandenen störenden Verbindungen wird demnach bewirkt, dass die $H_2S$-Oxidation im Entschwefelungs-Reaktor nicht behindert wird. Das Reingas ist auch nach 10 Zyklen noch völlig frei von $H_2S$.

Vergleichsbeispiel
Wird zum Vergleich das gleiche Gasgemisch ohne vorherige Entfernung eines Teiles der Kohlenwasserstoffe im 1. Reaktor bei einer Temperatur von 150°C entschwefelt, so behindern die im Gasgemisch enthaltenen organischen Verbindungen die katalytische $H_2S$-Oxidation an der Aktivkohle so stark, dass schon nach 3 Stunden Betriebszeit etwa 600 mg $H_2S/m^3$ im Reingas gefunden werden.

**Patentanspruch**

Verfahren zur Entfernung von Schwefelwasserstoff aus kohlenwasserstoffhaltigen Gasgemischen mittels Aktivkohle bei erhöhten Temperaturen, dadurch gekennzeichnet, dass das Gas in einer 1. Stufe (Vorfilter) in einem mit einer Aktivkohle mit einem durch Benzoladsorption gemessenen Porenvolumen von 0,3–0,8 cm³/g (Adsorptionsporenvolumen) und einem durch Quecksilberporosimetrie bestimmten Porenvolumen von 0,3–0,9 cm³/g (Zuleitungsporenvolumen) und einer BET-Oberfläche von 700–1.500 m²/g gefüllten Reaktor bei Temperaturen zwischen 100 und 250°C von die katalytische $H_2S$-Oxidation behindernden Gaskomponenten befreit wird, worauf in einer 2. Stufe (Entschwefelungsreaktor) nach Zusatz der zur katalytischen $H_2S$-Oxidation benötigten Sauerstoffmenge der Schwefelwasserstoff in einem mit einem Aktivkohle-Katalysator gefüllten Reaktor oxidiert und adsorptiv aus dem Gas entfernt wird.

**Claim**

A method of removing hydrogen sulphide from hydrocarboncontaining gas mixtures by means of activated carbon at high temperatures, characterised in that the gas is freed of the gas components preventing the catalytic $H_2S$-oxidation in a first stage (preliminary filter) at temperatures between 100 and 250°C in a reactor filled with an activated carbon having a pore volume of 0.3–0.8 cm³/g (adsorption pore volume) measured by benzene adsorption and a pore volume of 0.3–0.9 cm³/g (supply pore volume) determined by mercury porosimetry and a BET surface of 700–1,500 m²/g, after which the hydrogen sulphide is oxidized and removed from the gas in an adsorptive manner in a reactor filled with an activated carbon catalyst in a second stage (desulphurizing reactor) following the addition of the quantity of oxygen required for the catalytic $H_2S$-oxidation.

**Revendication**

Procédé de séparation de l'hydrogène sulfuré à partir de mélanges gazeux contenant des hydrocarbures, au moyen de charbon actif, à des températures élevées, caractérisé en ce qu'on libère le gas des constituants gazeux empêchant l'oxydation catalytique de $H_2S$, dans un premier stade (préfiltre), dans un réacteur rempli d'un charbon actif avec un volume de pores de 0,3 à 0,8 cm³/g (volume de pores d'adsorption), mesuré par adsorption de benzène, et avec un volume de pores déterminé par porosimétrie au mercure de 0,3 à 0,9 cm³/g (volume de pores de diffusion, et une surface spécifique BET de 700 à 1500 m²/g, après quoi dans un second stade (réacteur de désulfuration) après addition de la quantité d'oxygène nécessaire à l'oxydation catalytique de $H_2S$ on oxyde l'hydrogène sulfuré dans un réacteur rempli d'un catalyseur à charbon actif et on le sépare du gaz par adsorption.